# EUROPÄISCHE PATENTSCHRIFT

(11) **EP 3 524 868 B1**
(45) Veröffentlichungstag und Bekanntmachung des Hinweises auf die Patenterteilung: **01.12.2021**
(21) Anmeldenummer: 19155885.7
(22) Anmeldetag: 07.02.2019
(51) Int. Cl.: F16L 55/11, B65D 39/12, F16J 13/12, F16J 15/02, F16L 55/115, F16L 55/132, F16J 13/14

(54) **VORRICHTUNG ZUM ABDICHTEN EINER AUSNEHMUNG IN EINEM OBJEKT**
DEVICE FOR SEALING A RECESS IN AN OBJECT
DISPOSITIF D'ÉTANCHÉIFICATION D'UN ÉVIDEMENT DANS UN OBJET

(30) Priorität: 08.02.2018 DE 102018102815
(43) Veröffentlichungstag der Anmeldung: 14.08.2019
(73) Patentinhaber: Amazonen-Werke H. Dreyer SE & Co. KG, 49205 Hasbergen (DE)
(72) Erfinder: BOLTES, Hajo, 26131 Oldenburg (DE); CLAUSSEN, Reiner, 27801 Dötlingen (DE)

(56) Entgegenhaltungen:
- US-A- 2 993 616
- US-A- 3 365 093
- US-A- 3 673 913
- US-A1- 2003 014 905

## Beschreibung

Die Erfindung betrifft eine Vorrichtung zum Abdichten einer Ausnehmung in einem Objekt nach dem Oberbegriff des Patentanspruchs 1 und eine Baugruppe nach dem Oberbegriff des Patentanspruchs 11.

Eine derartige Vorrichtung zum Abdichten einer Ausnehmung in einem Objekt ist in US 3 365 093 A offenbart,

Bei einer Vielzahl von Baugruppen besteht die Notwendigkeit Ausnehmungen, wie zum Beispiel Bohrungen, in einem Objekt abzudichten. Das Objekt kann dabei beispielsweise eine Platte oder ein Gehäusesegment sein.

Abhängig von dem Einsatzgebiet der jeweiligen Baugruppe kann dabei ein flüssigkeits- und/oder gasdichtes Abdichten gewünscht sein, beispielsweise um Material oder elektronische Bauteile vor Feuchtigkeit zu schützen.

Aufgrund von Toleranzschwankungen oder unsauber durchgeführten Fertigungsvorgängen kann es zu teilweise erheblichen Maß- und/oder Formunterschieden bei den abzudichtenden Ausnehmungen kommen, sodass in Frage kommende Abdichtvorrichtungen zum Ausgleich derartiger Unregelmäßigkeiten geeignet sein müssen.

Aus der Druckschrift US 2003/0014905 A1 ist beispielsweise eine Bohrlochabdeckung bekannt, bei welcher ein in die Ausnehmung einzusetzender Deformationskörper mittels eines Scheibenpaares derart verformbar ist, dass der Außenmantel des Deformationskörpers gegen die Innenkontur des Bohrlochs gepresst wird, sodass eine Dichtwirkung erzielt wird.

Diese und andere bekannte Lösungen zum Abdichten von Ausnehmungen haben jedoch den Nachteil, dass die Montage vergleichsweise aufwendig ist und einzelne Teile der Vorrichtung während der Montage temporär gehalten werden müssen, damit weitere Teile bestimmungsgemäß positioniert und fixiert werden können. Eine Einhandmontage ist aus diesem Grund regelmäßig nicht möglich.

Teilweise sind für die Montage sogar mehrere Monteure notwendig.

Die der Erfindung zugrundeliegende Aufgabe besteht somit darin, den Montagevorgang von Abdichtvorrichtungen für Ausnehmungen zu vereinfachen.

Die Aufgabe wird gelöst durch eine Vorrichtung der eingangs genannten Art mit den Merkmalen des unabhängigen Anspruchs 1.

Die Erfindung macht sich die Erkenntnis zunutze, dass eine Einhandmontage möglich ist, wenn der Deformationskörper samt der Spanneinrichtung während des Montageprozesses der Vorrichtung positionsstabil in der Ausnehmung angeordnet werden kann und ein anschließendes Einsetzen der Druckscheibe zwischen den Deformationskörper und den Spannkörper der Spanneinrichtung möglich ist. Dadurch, dass die Druckscheibe zwischen den Deformationskörper und den Spannkörper einsetzbar ist, kann der Deformationskörper vor dem Einsetzen der Druckscheibe mittels des Spannkörpers der Spanneinrichtung vor dem Herausfallen gesichert werden. Ein zusätzliches Festhalten des Deformationskörpers vor oder während des Einsetzens der Druckscheibe ist nicht länger notwendig. Demnach erlaubt die Vorrichtung eine Einhandmontage, sodass der Montagevorgang wesentlich vereinfacht ist.

Die Vorrichtung zum Abdichten der Ausnehmung kann auch als Quetschdichtung bezeichnet werden. Durch die Formveränderung des Deformationskörpers können große Toleranzschwankungen aufgrund unregelmäßiger oder unsauberer Fertigung ohne Weiteres ausgeglichen werden.

In der erfindungsgemäßen Ausführungsform der Vorrichtung weist die Druckscheibe eine schlitzförmige Ausnehmung auf, welche sich von einer Außenkante der Druckscheibe bis vorzugsweise in einen Mittelbereich der Druckscheibe erstreckt. Durch die schlitzförmige Ausnehmung kann die Druckscheibe zwischen den Deformationskörper und den Spannkörper geschoben werden, wobei ein Teil der Spanneinrichtung während des Einsetzens innerhalb der schlitzförmigen Ausnehmung der Druckscheibe angeordnet ist. Nachdem die Druckscheibe zwischen den Deformationskörper und den Spannkörper eingesetzt worden ist, erstreckt sich ein Teil der Spanneinrichtung durch den Mittelbereich der schlitzförmigen Ausnehmung.

Außerdem ist eine erfindungsgemäße Vorrichtung bevorzugt, bei welcher die Spanneinrichtung ein längliches Element mit einem Außengewinde aufweist, wobei der Spannkörper ein mit dem Außengewinde korrespondierendes Innengewinde aufweist. Das längliche Element kann beispielsweise eine Schraube oder eine Gewindestange sein. Alternativ kann das längliche Element ein Bestandteil einer Schraube oder einer Gewindestange sein. Die Schraube kann eine Flachrundschraube sein. Der Spannkörper kann beispielsweise als Mutter ausgebildet sein. Zwischen der Druckscheibe und dem Spannkörper kann eine Unterlegscheibe angeordnet sein.

In einer weiteren bevorzugten Ausführungsform weist die erfindungsgemäße Vorrichtung eine Anschlagsscheibe auf, welche eine Kontaktfläche für den Deformationskörper aufweist. Die Kontaktfläche der Anschlagsscheibe ist mittels der Spanneinrichtung gegen den Deformationskörper pressbar. Insbesondere sind die Druckscheibe und die Anschlagsscheibe im montierten Zustand der Vorrichtung auf gegenüberliegenden Seiten des Deformationskörpers angeordnet. Vorzugsweise weisen der Deformationskörper, die Druckscheibe und/oder die Anschlagsscheibe eine im Wesentlichen kreisförmige Grundform auf. Vorzugsweise überragt die Druckscheibe und/oder die Anschlagsscheibe den Deformationskörper im montierten Zustand der Vorrichtung.

In einer Weiterbildung der erfindungsgemäßen Vorrichtung weist die Anschlagsscheibe ein Durchgangsloch auf, durch welches sich das längliche Element der Spanneinrichtung erstreckt. Das Durchgangsloch ist vorzugsweise in einem Zentralbereich der Anschlagsscheibe angeordnet und/oder weist einen kreisrunden Querschnitt auf. Vorzugsweise ist der Mittelbereich der schlitzförmigen Ausnehmung in der Druckscheibe im montierten Zustand der Vorrichtung mit dem Durchgangsloch der Anschlagsscheibe in Deckung gebracht. Somit kann sich das längliche Element der Spanneinrichtung sowohl durch den Deformationskörper als auch durch die Druckscheibe und die Anschlagsscheibe erstrecken.

Vorteilhaft ist außerdem eine erfindungsgemäße Vorrichtung, bei welcher auf der dem Deformationskörper abgewandten Seite der Anschlagsscheibe ein das Durchgangsloch überragender Endabschnitt des länglichen Elements angeordnet ist. Der Endabschnitt des länglichen Elements ist vorzugsweise als Schraubenkopf ausgebildet. Insbesondere weist der Endabschnitt eine im Wesentlichen ringförmige Kontaktfläche auf, welche im montierten Zustand der Vorrichtung mit der dem Deformationskörper gegenüberliegenden Seite der Anschlagsscheibe in Kontakt steht.

In einer Weiterbildung der erfindungsgemäßen Vorrichtung weist die Spanneinrichtung eine Verdrehsicherung auf. Die Verdrehsicherung gewährleistet, dass eine bei der Montage auftretende Momentenbelastung an der Spanneinrichtung nicht zu einem Verdrehen der Spanneinrichtung führt. Insbesondere, wenn das längliche Element als Schraube und der Spannkörper als Mutter ausgebildet ist, kann durch die Verdrehsicherung ein Mitdrehen der Schraube beim Eindrehen der Mutter effektiv vermieden werden. Insbesondere wird die Verdrehsicherung durch einen Formschluss umgesetzt. Beispielsweise weist das längliche Element einen Sicherungsabschnitt auf, welcher verdrehsicher mit dem Deformationskörper und/oder der Anschlagsscheibe koppelbar ist. Beispielsweise weist das längliche Element in dem Bereich des Sicherungsabschnitts eine sechseckige Grundform auf, welche in eine korrespondierende sechseckige Ausnehmung in dem Deformationskörper und/oder in der Anschlagsscheibe einsetzbar ist, sodass eine Verdrehung des länglichen Elements gegenüber dem Deformationskörper und/oder der Anschlagsscheibe vermieden wird.

Darüber hinaus ist eine erfindungsgemäße Vorrichtung vorteilhaft, bei welcher der Deformationskörper elastisch und/oder plastisch verformbar ist. Durch die elastische Verformbarkeit des Deformationskörpers kann die Vorrichtung beschädigungsfrei und wiederverwendbar aus der Ausnehmung in dem Objekt entfernt werden. In anderen Anwendungsfällen kann die plastische Verformbarkeit des Deformationskörpers vorteilhaft sein, beispielsweise wenn eine dauerhafte Abdichtung der Ausnehmung in dem Objekt gewünscht ist.

Darüber hinaus ist eine erfindungsgemäße Vorrichtung bevorzugt, bei welcher der Deformationskörper teilweise oder vollständig aus einem Gummimaterial, insbesondere aus einem synthetischen Gummimaterial, ausgebildet ist. Der Deformationskörper weist vorzugsweise ein zentrales Durchgangsloch und/oder einen runden Querschnitt auf. Das Gummimaterial und/oder deren Zusammensetzung kann in Abhängigkeit der notwendigen Deformationseigenschaften des Deformationskörpers ausgewählt werden. Die Druckscheibe und/oder die Anschlagsscheibe können aus Metall, einer Metalllegierung oder einem formstabilen Kunststoff ausgebildet sein.

Weiterhin ist eine erfindungsgemäße Vorrichtung vorteilhaft, bei welcher die Kontaktfläche der Druckscheibe größer als die mit der Kontaktfläche der Druckscheibe in Kontakt stehende Außenfläche des Deformationskörpers ist. Alternativ oder zusätzlich ist die Kontaktfläche der Druckscheibe größer als die Ausnehmung in dem Objekt. Dadurch, dass die Kontaktfläche der Druckscheibe größer als die mit der Kontaktfläche der Druckscheibe in Kontakt stehende Außenfläche des Deformationskörpers ist, kann eine gleichmäßige Druckkraft über die gesamte Außenfläche des Deformationskörpers erreicht werden. Hieraus resultiert eine gleichmäßige Verformung des Deformationskörpers bei Druckbeanspruchung, sodass eine allseitige Dichtwirkung durch den Deformationskörper gewährleistet wird.

Darüber hinaus ist eine erfindungsgemäße Vorrichtung vorteilhaft, bei welcher die Kontaktfläche der Anschlagsscheibe größer als die mit der Kontaktfläche der Anschlagsscheibe in Kontakt stehende Außenfläche des Deformationskörpers ist. Alternativ oder zusätzlich ist die Kontaktfläche der Anschlagsscheibe größer als die Ausnehmung in dem Objekt. Wenn die Kontaktfläche der Anschlagsscheibe größer als die Ausnehmung in dem Objekt ist, kann die Anschlagsscheibe gemeinsam mit dem Deformationskörper und der Spanneinrichtung in die Ausnehmung eingesetzt werden, wobei die Anschlagsscheibe ein Herausfallen dieser Komponenten aus der Ausnehmung verhindert. In diesem Fall ergibt sich vorzugsweise eine im Wesentlichen ringförmige Kontaktfläche zwischen der Anschlagsscheibe und dem die abzudichtende Ausnehmung aufweisenden Objekt.

Die der Erfindung zugrundeliegende Aufgabe wird ferner durch eine Baugruppe der eingangs genannten Art gelöst, wobei die Vorrichtung zum Abdichten der Ausnehmung der erfindungsgemäßen Baugruppe nach einer der vorstehend beschriebenen Ausführungsformen ausgebildet ist. Hinsichtlich der Vorteile und Modifikationen der erfindungsgemäßen Baugruppe wird zunächst auf die Vorteile und Modifikationen der erfindungsgemäßen Vorrichtung zum Abdichten einer Ausnehmung in einem Objekt verwiesen.

In einer bevorzugten Ausführungsform ist die erfindungsgemäße Baugruppe als Säbehälter einer Sämaschine ausgebildet. Das sich innerhalb des Säbehälters befindliche Saatgut wird mittels der Vorrichtung effektiv vor Feuchtigkeit geschützt. Somit wird beispielsweise ein Verklumpen des Saatguts vor der Ausbringung vermieden. Außerdem sorgt die flache und runde Ausführung der Anschlagscheibe dafür, dass das Saatgut nahezu ungestört über die Behälterwände nachrutschen kann.

Vorzugsweise ist das Objekt teilweise oder vollständig, jedoch zumindest in dem Bereich der Ausnehmung aus einem Kunststoff, insbesondere aus Polyethylen ausgebildet. Beispielsweise kann das Objekt in dem Bereich der Ausnehmung eine Wandstärke zwischen 5 und 20 mm, insbesondere eine Wandstärke von etwa 11 mm, aufweisen.

Weitere Einzelheiten der Erfindung sind der Figurenbeschreibung und den Zeichnungen zu entnehmen. Es zeigen
- Fig. 1: ein Ausführungsbeispiel der erfindungsgemäßen Vorrichtung in einer perspektivischen Darstellung;
- Fig. 2: die in der Fig. 1 dargestellte Vorrichtung in einer Draufsicht;
- Fig. 3: die in der Fig. 1 dargestellte Vorrichtung in einer Seitenansicht;
- Fig. 4a: eine Ausnehmung in einem Objekt in einer Schnittdarstellung;
- Fig. 4b: einen Montagezustand einer in die Ausnehmung aus der Fig. 4a eingesetzten erfindungsgemäßen Vorrichtung in einer Schnittdarstellung; und
- Fig. 4c: die in der Fig. 4b dargestellte Vorrichtung nach Abschluss der Montage in einer Schnittdarstellung.

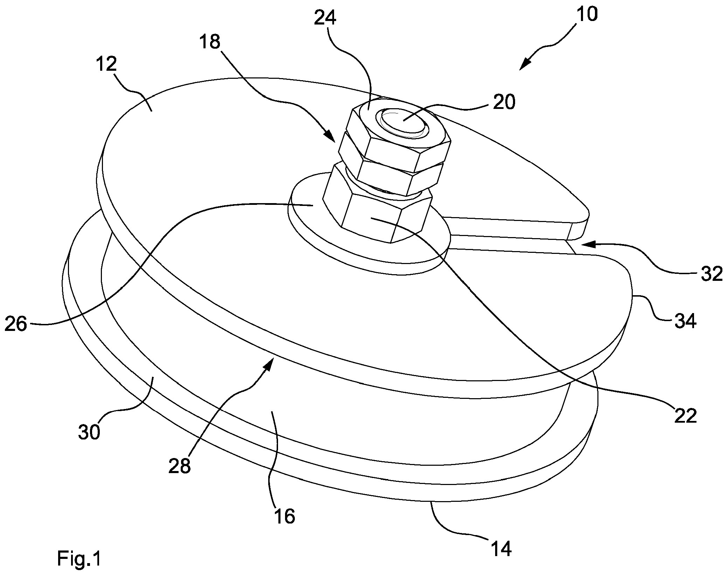

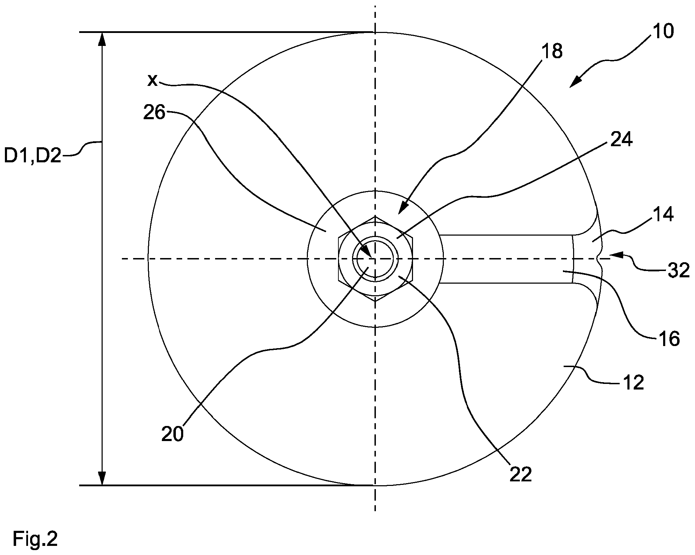

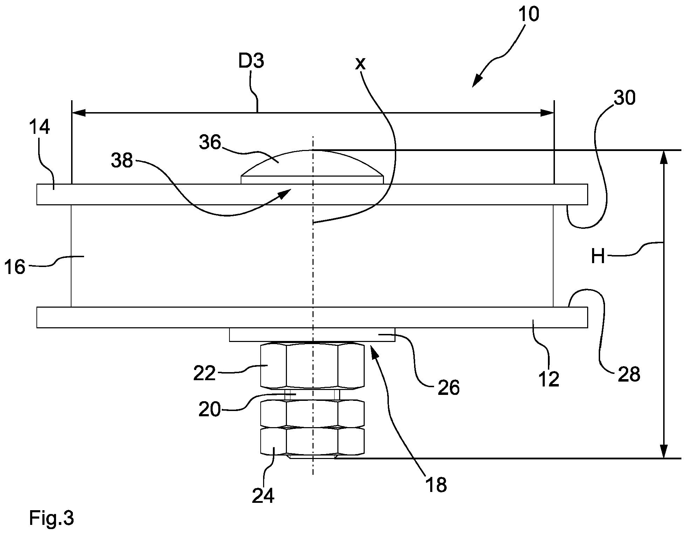

Die Fig. 1 bis Fig. 3 zeigen eine Vorrichtung 10 zum Abdichten einer Ausnehmung 104 in einem Objekt 102.

Die Vorrichtung 10 umfasst eine Druckscheibe 12 und eine Anschlagsscheibe 14, wobei zwischen der Druckscheibe 12 und der Anschlagsscheibe 14 ein Deformationskörper 16 angeordnet ist. Eine Spanneinrichtung 18 erstreckt sich entlang einer Mittelachse x durch die Druckscheibe 12, den Deformationskörper 16 und die Anschlagsscheibe 14 und weist eine Höhe H auf.

Die Druckscheibe 12 weist eine Kontaktfläche 28 für den Deformationskörper 16 auf. Die Anschlagsscheibe 14 weist eine Kontaktfläche 30 für den Deformationskörper 16 auf. Die Kontaktfläche 30 der Anschlagsscheibe 14 und die Kontaktfläche 28 der Druckscheibe 12 sind mittels der Spanneinrichtung 18 gegen den Deformationskörper 16 pressbar.

Der Deformationskörper 16 ist aus einem synthetischen Gummimaterial ausgebildet und elastisch verformbar. Die Druckscheibe 12 und die

Anschlagsscheibe 14 sind aus einem formstabilen Material ausgebildet, beispielsweise aus Metall, einer Metalllegierung oder einem formstabilen Kunststoff.

Durch das Pressen der Kontaktflächen 28, 30 gegen den Deformationskörper 16 wird eine Verformung des Deformationskörpers 16 hervorgerufen, durch welche sich der Deformationskörper 16 in radialer Richtung ausdehnt. Wenn der Deformationskörper 16 in eine Ausnehmung 104 in einem Objekt 102 eingesetzt ist, erfolgt durch die radiale Ausdehnung des Deformationskörpers 16 eine Abdichtung der Ausnehmung 104. Durch die Verformung des Deformationskörpers 16 können somit auch große Toleranzschwankungen aufgrund von unregelmäßiger oder unsauberer Fertigung ausgeglichen werden. Die Vorrichtung 10 kann also auch als Quetschdichtung bezeichnet werden.

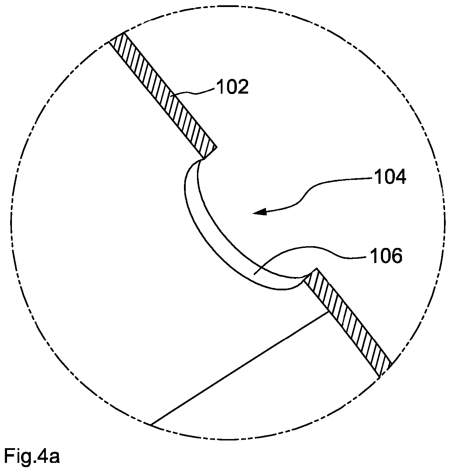

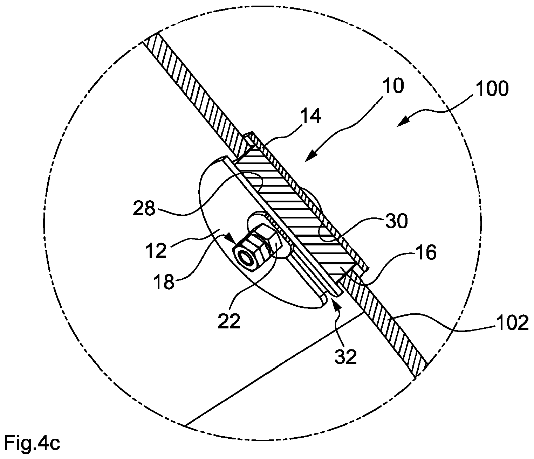

Die Druckscheibe 12 weist eine schlitzförmige Ausnehmung 32 auf, welche sich von einer Außenkante 34 der Druckscheibe 12 bis in einen Mittelbereich der Druckscheibe 12 erstreckt. Die schlitzförmige Ausnehmung 32 erlaubt eine wesentliche Vereinfachung des Montageprozesses, wie mit Bezug auf die Fig. 4a bis Fig. 4c nachfolgend beschrieben ist.

Die Anschlagsscheibe 14 und der Deformationskörper 16 weisen jeweils ein zentrales Durchgangsloch für die Spanneinrichtung 18 auf. Die Druckscheibe 12, die Anschlagsscheibe 14 und der Deformationskörper 16 weisen jeweils einen runden Querschnitt auf. Der Durchmesser D1 der Druckscheibe 12 und der Durchmesser D2 der Anschlagsscheibe 14 stimmen überein. Der Deformationskörper 16 weist einen kleineren Durchmesser D3 als die Druckscheibe 12 und die Anschlagsscheibe 14 auf.

Die Spanneinrichtung 18 umfasst ein längliches als Flachrundschraube ausgebildetes Element 20 mit einem Außengewinde. Auf der dem Deformationskörper 16 abgewandten Seite der Anschlagsscheibe 14 ist ein das Durchgangsloch der Anschlagsscheibe 14 überragender Endabschnitt 36 des länglichen Elements 20 angeordnet. Der Endabschnitt 36 des länglichen Elements 20 ist als Schraubenkopf ausgebildet. Ferner umfasst die Spanneinrichtung 18 einen als Mutter ausgebildeten Spannkörper 22 mit einem Innengewinde. Das Außengewinde des länglichen Elements 20 korrespondiert mit dem Innengewinde des Spannkörpers 22. Zwischen der Druckscheibe 12 und dem Spannkörper 22 ist eine Unterlegscheibe 26 angeordnet.

Beim Aufdrehen des Spannkörpers 22 auf das längliche Element 20 wird der Abstand zwischen dem Spannkörper 22 und dem Endabschnitt 36 des länglichen Elements 20 verringert, sodass auch der Abstand zwischen der Druckscheibe 12 und der Anschlagsscheibe 14 verringert wird. Die Abstandsverringerung zwischen der Druckscheibe 12 und der Anschlagsscheibe 14 verursacht die Verformung des Deformationskörpers 16.

Damit ein komfortables Aufdrehen des Spannkörpers 22 auf das längliche Element 20 erfolgen kann, verfügt die Spanneinrichtung 18 über eine Verdrehsicherung 38. Die Verdrehsicherung 38 verhindert durch einen Formschluss zwischen dem länglichen Element 20 und der Anschlagsscheibe 14 eine Verdrehung des länglichen Elements 20 gegenüber der Anschlagsscheibe 14. Aufgrund der Reibkraft zwischen der Anschlagsscheibe 14 und dem die Ausnehmung 104 umgebenden Abschnitt des Objekts 102 wird eine Drehbewegung des länglichen Elements 20 beim Aufdrehen des Spannkörpers 22 im Wesentlichen vermieden.

Außerdem ist auf das Außengewinde des länglichen Elements 20 eine Muttersicherung 24 aus zwei Einzelmuttern aufgeschraubt.

Die Fig. 4a bis Fig. 4c zeigen einen Montageprozess einer Vorrichtung 10 zum Abdichten einer Ausnehmung 104 in einem Objekt 102, wobei das die Ausnehmung 104 aufweisende Objekt 102 und die Vorrichtung 10 zum Abdichten der Ausnehmung 104 in dem Objekt 102 eine Baugruppe 100 ausbilden.

Die Fig. 4a zeigt eine als Durchgangloch ausgebildete kreisrunde Ausnehmung 104 in einem plattenartigen Abschnitt eines Objekts 102.

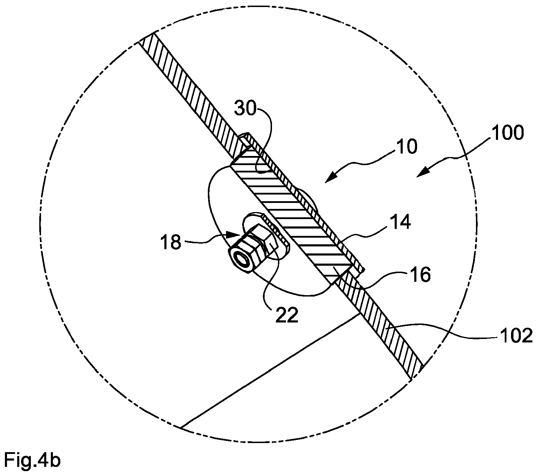

Wie die Fig. 4b zeigt, ist zunächst der Deformationskörper 16 in die Ausnehmung 104 einzusetzen. Der Deformationskörper 16 ist über die Spanneinrichtung 18 mit der Anschlagsscheibe 14 verbunden.

Dadurch, dass die Kontaktfläche 30 der Anschlagsscheibe 14 größer als die mit der Kontaktfläche 30 der Anschlagsscheibe 14 in Kontakt stehende Außenfläche des Deformationskörpers 16 und größer als die Ausnehmung 104 in dem Objekt 102 ist und der als Mutter ausgebildete Spannkörper 22 bereits teilweise aufgeschraubt ist, wird der Deformationskörper 16 vor dem Herausfallen aus der Ausnehmung 104 gesichert, sodass keine zusätzliche Stabilisierung des Deformationskörpers 16 durch einen Monteur notwendig ist.

Die schlitzförmige Ausnehmung 32 in der Druckscheibe 12 erlaubt es, dass die Druckschreibe während des Montageprozesses der Vorrichtung 10 zwischen den Deformationskörper 16 und den Spannkörper 22 einsetzbar ist. Dadurch, dass die Druckscheibe 12 zwischen den Deformationskörper 16 und den Spannkörper 22 einsetzbar ist, bedarf es auch keiner Demontage des den Deformationskörper 16 sichernden Spannkörpers 22. Somit wird die Montage wesentlich vereinfacht und eine Einhandmontage ermöglicht.

In der dargestellten Ausführungsform ist die Kontaktfläche 28 der Druckscheibe 12 ebenfalls größer als die mit der Kontaktfläche 28 der Druckscheibe 12 in Kontakt stehende Außenfläche des Deformationskörpers 16 und größer als die Ausnehmung 104 in dem Objekt 102. Somit sorgt die Druckscheibe 12 vor dem Verpressen des Deformationskörpers 16 ebenfalls für eine Sicherung gegen Herausfallen.

Außerdem wird durch das Übermaß der Druckscheibe 12 und der Anschlagsscheibe 14 in Bezug auf den Deformationskörper 16 eine gleichmäßige Spannungsverteilung und somit eine gleichmäßige Deformation des Deformationskörpers 16 erreicht, sodass sich durch die Verpressung ein umlaufender Kontaktbereich zwischen dem Deformationskörper 16 und der Bewandung 106 der Ausnehmung 104 ausbildet.

Die dargestellte Baugruppe 100 kann beispielsweise ein Bestandteil eines Säbehälters einer Sämaschine sein.

### Bezugszeichenliste

- 10: Vorrichtung
- 12: Druckscheibe
- 14: Anschlagsscheibe
- 16: Deformationskörper
- 18: Spanneinrichtung
- 20: längliches Element
- 22: Spannkörper
- 24: Muttersicherung
- 26: Unterlegscheibe
- 28: Kontaktfläche
- 30: Kontaktfläche
- 32: schlitzförmige Ausnehmung
- 34: Außenkante
- 36: Endabschnitt
- 38: Verdrehsicherung

- 100: Baugruppe
- 102: Objekt
- 104: Ausnehmung
- 106: Bewandung

- D1-D3: Durchmesser
- H: Höhe
- x: Mittelachse

## Patentansprüche

1. Vorrichtung (10) zum Abdichten einer Ausnehmung (104) in einem Objekt (102), mit
- einem Deformationskörper (16), welcher dazu eingerichtet ist, in die Ausnehmung (104) eingesetzt zu werden;
- einer Druckscheibe (12), welche eine Kontaktfläche (28) für den Deformationskörper (16) aufweist; und
- einer sich durch den Deformationskörper (16) erstreckenden Spanneinrichtung (18),
wobei die Kontaktfläche (28) der Druckscheibe (12) mittels eines Spannkörpers (22) der Spanneinrichtung (18) gegen den Deformationskörper (16) pressbar ist,
wobei die Druckscheibe (12) derart ausgebildet ist, dass die Druckscheibe
während des Montageprozesses der Vorrichtung (10) zwischen den Deformationskörper (16) und den Spannkörper (22) einsetzbar ist, **dadurch gekennzeichnet, dass** die Druckscheibe (12) eine schlitzförmige Ausnehmung (32) aufweist, welche sich von einer Außenkante (34) der Druckscheibe (12) vorzugsweise bis in einen Mittelbereich der Druckscheibe (12) erstreckt.

2. Vorrichtung (10) nach Anspruch 1, **dadurch gekennzeichnet, dass** die Spanneinrichtung (18) ein längliches Element (20) mit einem Außengewinde aufweist, wobei der Spannkörper (22) ein mit dem Außengewinde korrespondierendes Innengewinde aufweist.

3. Vorrichtung (10) nach einem der vorstehenden Ansprüche, **gekennzeichnet durch** eine Anschlagsscheibe (14), welche eine Kontaktfläche (30) für den Deformationskörper (16) aufweist, wobei die Kontaktfläche (30) der Anschlagsscheibe (14) mittels der Spanneinrichtung (18) gegen den Deformationskörper (16) pressbar ist.

4. Vorrichtung (10) nach Anspruch 3,
**dadurch gekennzeichnet, dass** die Anschlagsscheibe (14) ein Durchgangsloch aufweist, durch welches sich das längliche Element (20) der Spanneinrichtung (18) erstreckt.

5. Vorrichtung (10) nach Anspruch 3 oder 4,
**dadurch gekennzeichnet, dass** auf der dem Deformationskörper (16) abgewandten Seite der Anschlagsscheibe (14) ein das Durchgangsloch überragender Endabschnitt (36) des länglichen Elements (20) angeordnet ist.

6. Vorrichtung (10) nach einem der vorstehenden Ansprüche,
**dadurch gekennzeichnet, dass** die Spanneinrichtung (18) eine Verdrehsicherung (38) aufweist.

7. Vorrichtung (10) nach einem der vorstehenden Ansprüche,
**dadurch gekennzeichnet, dass** der Deformationskörper (16) elastisch und/oder plastisch verformbar ist.

8. Vorrichtung (10) nach einem der vorstehenden Ansprüche,
**dadurch gekennzeichnet, dass** der Deformationskörper (16) teilweise oder vollständig aus einem Gummimaterial, insbesondere aus einem synthetischen Gummimaterial, ausgebildet ist.

9. Vorrichtung (10) nach einem der vorstehenden Ansprüche,
**dadurch gekennzeichnet, dass** die Kontaktfläche (28) der Druckscheibe (12) größer als die mit der Kontaktfläche (28) der Druckscheibe (12) in Kontakt stehende Außenfläche des Deformationskörpers (16) und/oder größer als die Ausnehmung (104) in dem Objekt (102) ist.

10. Vorrichtung (10) nach einem der Ansprüche 4 bis 9,
**dadurch gekennzeichnet, dass** die Kontaktfläche (30) der Anschlagsscheibe (14) größer als die mit der Kontaktfläche (30) der Anschlagsscheibe (14) in Kontakt stehende Außenfläche des Deformationskörpers (16) und/oder größer als die Ausnehmung (104) in dem Objekt (102) ist.

11. Baugruppe (100), mit
- einem eine Ausnehmung (104) aufweisenden Objekt (102), und
- einer Vorrichtung (10) zum Abdichten der Ausnehmung (104) in dem Objekt (102);
**dadurch gekennzeichnet, dass** die Vorrichtung (10) nach einem der vorstehenden Ansprüche ausgebildet ist.

12. Baugruppe (100) nach Anspruch 11,
**dadurch gekennzeichnet, dass** die Baugruppe (100) als Säbehälter einer Sämaschine ausgebildet ist.

## Claims

1. A device (10) for sealing a recess (104) in an object (102), having
- a deformation body (16) configured to be inserted into the recess (104);
- a pressure disk (12) having a contact surface (28) for the deformation body (16); and
- a clamping device (18) extending through the deformation body (16),
wherein the contact surface (28) of the pressure disk (12) can be pressed against the deformation body (16) by means of a clamping body (22) of the clamping device (18),
wherein the pressure disk (12) is formed in such a way that the pressure disk can be inserted between the deformation body (16) and the clamping body (22) during the assembly process of the device (10), **characterized in that** the pressure disk (12) has a slot-shaped recess (32) that extends from an outer edge (34) of the pressure disk (12) preferably into a central region of the pressure disk (12).

2. The device (10) according to claim 1,
**characterized in that** the clamping device (18) has an elongate element (20) with an external thread, wherein the clamping body (22) has an internal thread corresponding to the external thread.

3. The device (10) according to any one of the preceding claims,
**characterized by** a stop disk (14), which has a contact surface (30) for the deformation body (16), wherein the contact surface (30) of the stop disk (14) can be pressed against the deformation body (16) by means of the clamping device (18).

4. The device (10) according to claim 3,
**characterized in that** the stop disk (14) has a through-hole, through which the elongate element (20) of the clamping device (18) extends.

5. The device (10) according to claim 3 or 4,
**characterized in that** an end section (36) of the elongate element (20), which projects beyond the through-hole, is arranged on the side of the stop disk (14) facing away from the deformation body (16).

6. The device (10) according to any one of the preceding claims,
**characterized in that** the clamping device (18) has an anti-rotation device (38).

7. The device (10) according to any one of the preceding claims,
**characterized in that** the deformation body (16) is elastically and/or plastically deformable.

8. The device (10) according to any one of the preceding claims,
**characterized in that** the deformation body (16) is formed partially or completely from a rubber material, in particular from a synthetic rubber material.

9. The device (10) according to any one of the preceding claims,
**characterized in that** the contact surface (28) of the pressure disk (12) is larger than the outer surface of the deformation body (16) in contact with the contact surface (28) of the pressure disk (12) and/or is larger than the recess (104) in the object (102).

10. The device (10) according to any one of claims 4 to 9,
**characterized in that** the contact surface (30) of the stop disk (14) is larger than the outer surface of the deformation body (16) in contact with the contact surface (30) of the stop disk (14) and/or is larger than the recess (104) in the object (102).

11. An assembly (100), having
- an object (102) having a recess (104), and
- a device (10) for sealing the recess (104) in the object (102);
**characterized in that** the device (10) is formed according to any one of the preceding claims.

12. The assembly (100) according to claim 11,
**characterized in that** the assembly (100) is designed as a sowing container of a sowing machine.

## Revendications

1. Dispositif (10) d'étanchéification d'un évidement (104) dans un objet (102), comprenant
- un corps de déformation (16), lequel est conçu pour être inséré dans l'évidement (104) ;
- un disque de pression (12), lequel présente une surface de contact (28) pour le corps de déformation (16) ; et
- un dispositif de tension (18) qui s'étend à travers le corps de déformation (16),
dans lequel les surfaces de contact (28) du disque de pression (12) peuvent être pressées contre le corps de déformation (16) au moyen d'un corps de tension (22) du dispositif de tension (18),
dans lequel le disque de pression (12) est conçu de telle façon que le disque de pression peut être inséré entre le corps de déformation (16) et le corps de tension (22) pendant le processus de montage du dispositif (10), **caractérisé en ce que** le disque de pression (12) présente un évidement (32) en forme de fente, lequel s'étend à partir d'un bord extérieur (34) du disque de pression (12) de préférence jusqu'à l'intérieur d'une zone centrale du disque de pression (12).

2. Dispositif (10) selon la revendication 1,
**caractérisé en ce que** le dispositif de tension (18) présente un élément allongé (20) comprenant un filetage extérieur, le corps de tension (22) présentant un filetage intérieur correspondant au filetage extérieur.

3. Dispositif (10) selon l'une quelconque des revendications précédentes,
**caractérisé par** un disque de butée (14), lequel présente une surface de contact (30) pour le corps de déformation (16), dans lequel la surface de contact (30) du disque de butée (14) peut être pressée contre le corps de déformation (16) au moyen du dispositif de tension (18).

4. Dispositif (10) selon la revendication 3,
**caractérisé en ce que** le disque de butée (14) présente un trou traversant à travers lequel s'étend l'élément allongé (20) du dispositif de tension (18).

5. Dispositif (10) selon la revendication 3 ou 4,
**caractérisé en ce qu'**une section terminale (36) de l'élément allongé (20) faisant saillie du trou traversant est disposée sur le côté du disque de butée (14) opposé au corps de déformation (16).

6. Dispositif (10) selon l'une quelconque des revendications précédentes,
**caractérisé en ce que** le dispositif de tension (18) présente une sécurité anti-rotation (38).

7. Dispositif (10) selon l'une quelconque des revendications précédentes,
**caractérisé en ce que** le corps de déformation (16) est déformable élastiquement et/ou plastiquement.

8. Dispositif (10) selon l'une quelconque des revendications précédentes,
**caractérisé en ce que** le corps de déformation (16) est composé partiellement ou entièrement en matériau de caoutchouc, en particulier en un matériau de caoutchouc synthétique.

9. Dispositif (10) selon l'une quelconque des revendications précédentes,
**caractérisé en ce que** la surface de contact (28) du disque de pression (12) est supérieure à la surface extérieure du corps de déformation (16) qui est en contact avec la surface de contact (28) du disque de pression (12) et/ou supérieure à l'évidement (104) dans l'objet (102).

10. Dispositif (10) selon l'une quelconque des revendications 4 à 9,
**caractérisé en ce que** la surface de contact (30) du disque de butée (14) est supérieure à la surface extérieure du corps de déformation (16) qui est en contact avec la surface de contact (30) du disque de butée (14) et/ou supérieure à l'évidement (104) dans l'objet (102).

11. Assemblage (100), comprenant
- un objet (102) présentant un évidement (104) et
- un dispositif (10) d'étanchéification de l'évidement (104) dans l'objet (102) ;
**caractérisé en ce que** le dispositif (10) est formé selon l'une quelconque des revendications précédentes.

12. Assemblage (100) selon la revendication 11,
**caractérisé en ce que** l'assemblage (100) est formé comme un trémie à semences d'un semoir.
